# EUROPEAN PATENT APPLICATION

(11) **EP 4 741 242 A1**
(43) Date of publication of application: **13.05.2026**
(21) Application number: 24869534.8
(22) Date of filing: 08.01.2024
(51) Int. Cl.: B60W 20/10

(54) **HYBRID ELECTRIC VEHICLE, AND CONTROL METHOD AND APPARATUS FOR DUAL-ELECTRIC-MOTOR HYBRID SYSTEM OF HYBRID ELECTRIC VEHICLE**

(30) Priority: 27.09.2023 CN 202311265565
(71) Applicant: Aurobay (Ningbo) Intelligent Technology Co., Ltd., Ningbo, Zhejiang 315336 (CN); Aurobay (Yiwu) Drive Systems Co., Ltd., Jinhua, Zhejiang 322003 (CN); Aurobay Technology Co., Ltd, Ningbo, Zhejiang 315800 (CN)
(72) Inventor: JING, Junchao, Hangzhou, Zhejiang 310051 (CN); LIU, Yiqiang, Hangzhou, Zhejiang 310051 (CN); HUANG, Weishan, Hangzhou, Zhejiang 310051 (CN); ZUO, Botao, Hangzhou, Zhejiang 310051 (CN); YANG, Guikang, Hangzhou, Zhejiang 310051 (CN)
(74) Representative: Michalski Hüttermann & Partner Patentanwälte mbB
(86) International application number: PCT/CN2024/071108
(87) International publication number: WO 2025/065962

(57) **Abstract**

A hybrid vehicle and a control method and apparatus for a dual-motor hybrid system thereof. The dual-motor hybrid system includes an engine, a first motor, a second motor, a transmission, and a mode switching clutch. The first motor is connected to the engine, an input shaft of the transmission is connected to the engine, the first motor, and the second motor, and the mode switching clutch is connected to the second motor and the first motor, respectively. The method includes: in response to a speed request in a power-on upshift mode of the hybrid vehicle, obtaining a second motor request torque requested to be output by the second motor, and determining a speed regulation intervention torque of the input shaft; and if the speed regulation intervention torque is less than or equal to a speed regulation intervention torque capability of the second motor, controlling the second motor to output a sum of the speed regulation intervention torque and the second motor request torque.

## Description

### TECHNICAL FIELD

The present disclosure relates to the field of vehicle control technologies, and in particular, to a hybrid vehicle and a control method and apparatus for a dual-motor hybrid system thereof.

### BACKGROUND

Currently, some hybrid vehicles are equipped with a dual-motor hybrid system. Control of a gear-shifting process of the dual-motor hybrid system may affect the power performance and drivability of the entire vehicle.

### SUMMARY

The present disclosure provides a hybrid vehicle and a control method and apparatus for a dual-motor hybrid system thereof.

The present disclosure provides a control method for a dual-motor hybrid system of a hybrid vehicle, the dual-motor hybrid system including an engine, a first motor, a second motor, a transmission, and a mode switching clutch, where the first motor is drivably connected to the engine, an input shaft of the transmission is connected to the engine, the first motor, and the second motor, and the mode switching clutch is connected to the second motor and the first motor, respectively; the method including:
in response to a speed request in a power-on upshift mode of the hybrid vehicle, obtaining a second motor request torque requested to be output by the second motor, and determining a speed regulation intervention torque of the input shaft; and
in response to determining that the speed regulation intervention torque is less than or equal to a speed regulation intervention torque capability of the second motor, controlling the second motor to output a sum of the speed regulation intervention torque and the second motor request torque.

Optionally, the method further includes:
in response to determining that the speed regulation intervention torque is greater than the speed regulation intervention torque capability of the second motor and less than or equal to a speed regulation intervention torque capability of the input shaft, controlling the second motor to output a sum of the speed regulation intervention torque capability of the second motor and the second motor request torque, and controlling the first motor and/or the engine to output a remaining intervention torque, where the remaining intervention torque is a difference between the speed regulation intervention torque and the speed regulation intervention torque capability of the second motor.

Optionally, the hybrid vehicle includes a battery, the first motor is electrically connected to the battery, and controlling the first motor and/or the engine to output the remaining intervention torque includes:
obtaining a negative power capacity of the battery;
in response to determining that the negative power capacity is not greater than a negative power capacity threshold, controlling at least the first motor to output a first motor intervention torque; where the first motor intervention torque is less than or equal to the remaining intervention torque, and the first motor intervention torque is a positive torque or a negative torque.

Optionally, controlling the first motor and/or the engine to output the remaining intervention torque includes:
in response to determining that the negative power capacity is not greater than the negative power capacity threshold, and the remaining intervention torque is less than or equal to a speed regulation intervention torque capability of the first motor, controlling the first motor to output the first motor intervention torque, where the first motor intervention torque is equal to the remaining intervention torque; and
in response to determining that the negative power capacity is not greater than the negative power capacity threshold and the remaining intervention torque is greater than the speed regulation intervention torque capability of the first motor, controlling the first motor to output the speed regulation intervention torque capability of the first motor, and controlling the engine to output an engine intervention torque, where the engine intervention torque is equal to a difference between the remaining intervention torque and the speed regulation intervention torque capability of the first motor.

Optionally, the method further includes:
in response to determining that the negative power capacity is greater than the negative power capacity threshold, reducing a torque output by the first motor within a positive torque range.

Optionally, the method further includes:
in response to determining that the negative power capacity is greater than the negative power capacity threshold and a positive torque output by the first motor is less than the remaining intervention torque, controlling the engine to output an engine intervention torque, where the engine intervention torque is equal to a difference between the remaining intervention torque and the positive torque output by the first motor.

Optionally, the hybrid vehicle includes a shift clutch, and the shift clutch is engaged in the power-on upshift mode of the hybrid vehicle; and the method further includes:
in response to determining that the speed regulation intervention torque is greater than the speed regulation intervention torque capability of the input shaft, controlling the second motor to output the sum of the speed regulation intervention torque capability of the second motor and the second motor request torque, controlling the engine to output a speed regulation intervention torque capability of the engine, controlling the first motor according to the negative power capacity of the battery, and controlling the shift clutch to output a torque according to a difference between the speed regulation intervention torque and the speed regulation intervention torque capability of the input shaft.

Optionally, controlling the shift clutch to output the torque according to the difference between the speed regulation intervention torque and the speed regulation intervention torque capability of the input shaft includes:
determining a regulation torque according to a series/parallel mode of the dual-motor hybrid system, a gear-shifting mode, a gear, a target speed change rate of the input shaft, and an actual speed change rate of the input shaft;
determining an output torque of the shift clutch according to the difference between the speed regulation intervention torque and the speed regulation intervention torque capability of the input shaft, a feedforward torque of the shift clutch, and the regulation torque; and
controlling the shift clutch to output the output torque.

The present disclosure provides a computer-readable storage medium, including one or more processors for performing the control method for the dual-motor hybrid system of the hybrid vehicle according to any one of the above.

The present disclosure provides a control apparatus for a dual-motor hybrid system of a hybrid vehicle, including one or more processors for performing the control method for the dual-motor hybrid system of the hybrid vehicle according to any one of the above.

The present disclosure further provides a hybrid vehicle, including:
a dual-motor hybrid system including an engine, a first motor, a second motor, a transmission, and a mode switching clutch, the first motor being drivably connected to the engine, an input shaft of the transmission being connected to the engine, the first motor, and the second motor, and the mode switching clutch being connected to the second motor and the first motor, respectively; and
the control apparatus for the dual-motor hybrid system of the hybrid vehicle as described above, which is electrically connected to the dual-motor hybrid system.

In some embodiments, the dual-motor hybrid system includes the engine, the first motor, the second motor, the transmission, and the mode switching clutch. During gear-shifting of the vehicle, the second motor has a fast response speed. In the power-on upshift mode of the hybrid vehicle, the speed regulation intervention torque required for the input shaft to regulate a speed is determined according to the speed request. If the speed regulation intervention torque is less than or equal to the speed regulation intervention torque capability of the second motor, the second motor is controlled to output a torque according to the second motor request torque and the speed regulation intervention torque, so that the speed of the input shaft of the transmission can be quickly regulated by controlling the second motor to output the intervention torque, and the drivability of the vehicle can be maintained.

It is to be understood that both the above general description and the following detailed description are exemplary and explanatory only, and are not restrictive of the present disclosure.

### BRIEF DESCRIPTION OF DRAWINGS

The accompanying drawings, which are incorporated in and constitute a part of this specification, illustrate embodiments consistent with the present disclosure and, together with the specification, serve to explain the principles of the present disclosure.
FIG. 1 is a schematic structural diagram of a hybrid vehicle in a series mode according to embodiments of the present disclosure.
FIG. 2 is a schematic structural diagram of a hybrid vehicle in a parallel mode according to embodiments of the present disclosure.
FIG. 3 is a schematic diagram of a hybrid architecture to which a control method for a dual-motor hybrid system of a hybrid vehicle is applied according to embodiments of the present disclosure.
FIG. 4 is a flowchart of a control method for a dual-motor hybrid system of a hybrid vehicle according to embodiments of the present disclosure.
FIG. 5 is a flowchart of an embodiment of the step of "controlling the first motor or the engine to output a remaining intervention torque, or controlling the first motor and the engine to jointly output the remaining intervention torque" shown in FIG. 4.
FIG. 6 is a structural block diagram of a control apparatus for a dual-motor hybrid system of a hybrid vehicle according to embodiments of the present disclosure.

### DETAILED DESCRIPTION

Reference will now be made in detail to exemplary embodiments, examples of which are illustrated in drawings. When the following description refers to the drawings, unless otherwise indicated, the same numbers in different drawings indicate the same or similar elements. The implementations described in the following exemplary embodiments do not represent all implementations consistent with the present disclosure. Rather, they are merely examples of apparatuses and methods consistent with some aspects of the present disclosure as detailed in the appended claims.

The terms used in the present disclosure are only for a purpose of describing specific embodiments, and are not intended to limit the present disclosure. Unless otherwise defined, technical terms or scientific terms used in the present disclosure should have ordinary meanings understood by those of ordinary skill in the art to which the present disclosure belongs. "First", "second", and similar words used in the specification and claims of the present disclosure do not indicate any order, quantity, or importance, but are merely used to distinguish between different components. Similarly, words such as "a" or "an" do not indicate quantity limitation, but indicate that there is at least one. "A plurality of" or "several" means two or more. Unless otherwise indicated, terms such as "front", "rear", "lower", and/or "upper" are merely for ease of description, and are not limited to one position or one spatial orientation. Words such as "include" or "comprise" mean that elements or objects before "include" or "comprise" cover elements or objects listed after "include" or "comprise" and their equivalents, and do not exclude other elements or objects. Words such as "connect" or "couple" are not limited to physical or mechanical connections, but may include electrical connections, whether direct or indirect.

As used in the present disclosure and the appended claims, the singular forms "a", "an" and "the" are intended to include the plural forms as well, unless the context clearly indicates otherwise. It should also be understood that the term "and/or" used herein refers to and includes any or all possible combinations of one or more of the associated listed items.

When a hybrid vehicle operates in a power-on upshift mode, a motor is required to assist in compensating for torque in a torque phase to reduce a deceleration feel caused by gear-shifting. However, in a speed phase, if no torque intervention is performed on the motor, slow speed regulation is easily caused, which affects the drivability of the vehicle, and may lead to overheating of a shift clutch. Therefore, it is necessary to perform torque intervention control on a dual-motor hybrid system.

The dual-motor hybrid system in embodiments of the present disclosure includes an engine, a first motor, a second motor, a transmission, and a mode switching clutch. The first motor is connected to the engine, an input shaft of the transmission is connected to the engine, the first motor, and the second motor, and the mode switching clutch is connected to the second motor and the first motor, respectively. In response to a speed request in a power-on upshift mode of the hybrid vehicle, a second motor request torque requested to be output by the second motor is obtained, and a speed regulation intervention torque of the input shaft is determined; in response to determining that the speed regulation intervention torque is less than or equal to a speed regulation intervention torque capability of the second motor, the second motor is controlled to output a sum of the speed regulation intervention torque and the second motor request torque. The present disclosure may quickly regulate a speed of the input shaft of the transmission when the hybrid vehicle is in the power-on upshift mode.

The present disclosure provides a hybrid vehicle and a control method and apparatus for a dual-motor hybrid system thereof. The hybrid vehicle and the control method and apparatus for the dual-motor hybrid system thereof according to the present disclosure will be described in detail below in conjunction with the drawings. The features in the following embodiments and implementations may be combined with each other without conflict.

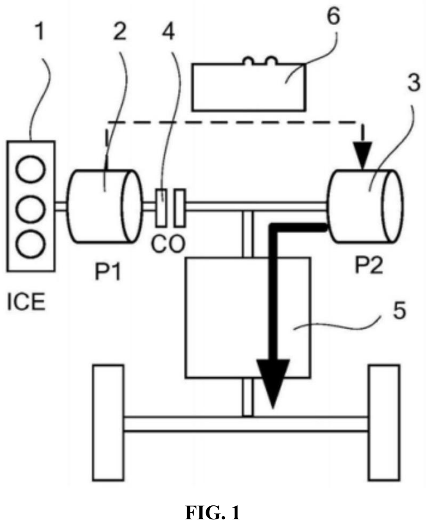

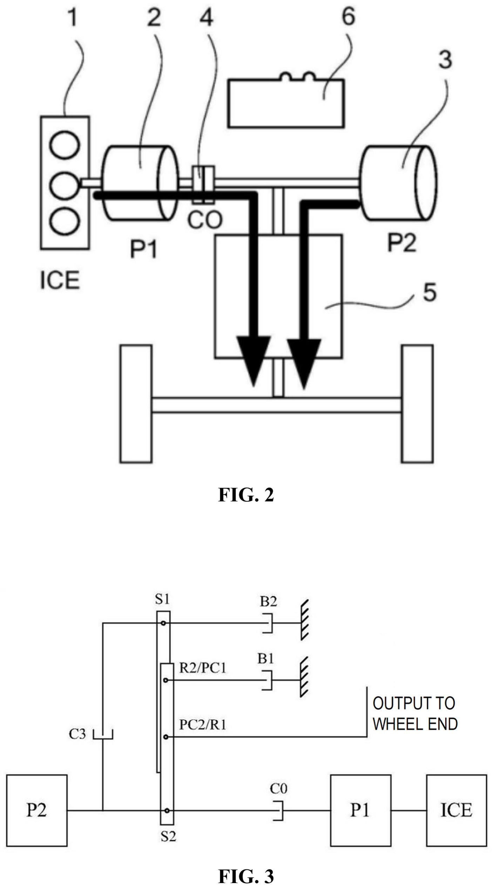

FIG. 1 is a schematic structural diagram of a hybrid vehicle in a series mode according to embodiments of the present disclosure. FIG. 2 is a schematic structural diagram of a hybrid vehicle in a parallel mode according to embodiments of the present disclosure. As shown in FIGS. 1 and 2, the dual-motor hybrid system of the hybrid vehicle has three modes: a pure electric mode, a series mode, and a parallel mode, and the hybrid vehicle may switch between these modes. As shown in FIGS. 1 and 2, the dual-motor hybrid system includes an engine 1 (for example, an internal combustion engine, represented by ICE in the drawings), a first motor 2 (represented by P1 in the drawings), a second motor 3 (represented by P2 in the drawings, which may also be referred to as a drive motor), a transmission 5, and a mode switching clutch 4 (represented by C0 in the drawings). The first motor 2 is drivably connected to the engine 1 and may drive the engine 1 to start. An input shaft of the transmission 5 is connected to the engine 1, the first motor 2, and the second motor 3, and the mode switching clutch 4 is connected to the second motor 3 and the first motor 2, respectively.

The hybrid vehicle includes a battery 6, the first motor 2 is electrically connected to the battery 6, and the first motor 2 may be configured to generate electricity to charge the battery 6. As shown in FIG. 1, in the series mode, the mode switching clutch 4 is in a disengaged state, the engine 1 supplies power to the battery 6 and the second motor 3 through the first motor 2, and the second motor 3 drives wheels through the transmission 5. As shown in FIG. 2, in the parallel mode, the mode switching clutch 4 is in an engaged state (also referred to as a coupled state), and the engine 1 and the second motor 3 jointly drive the wheels through the transmission 5.

The control method for the dual-motor hybrid system of the hybrid vehicle according to the embodiments of the present disclosure may be applied to the hybrid architecture shown in FIG. 3. As shown in FIG. 3, the hybrid architecture includes a first power mechanism, a second power mechanism, and a transmission mechanism. The first power mechanism includes an engine ICE and a first motor P1 that are connected with each other, and the second power mechanism includes a second motor P2. The transmission mechanism includes a fourth clutch C0 for mode switching, a double-row planetary gear, and a first clutch B1, a second clutch B2, and a third clutch C3 for gear-shifting control. The double-row planetary gear includes a first planetary gear composed of a first sun gear S1, a first planet carrier PC1, and a first gear ring R1, and a second planetary gear composed of a second sun gear S2, a second planet carrier PC2, and a second gear ring R2.

As shown in FIG. 3, an output shaft of the first motor P1 may be connected to the second sun gear S2 through the fourth clutch C0 to drive the second sun gear S2. An output shaft of the second motor P2 is connected to the second sun gear S2 to drive the second sun gear S2. The output shaft of the second motor P2 may also be connected to the first sun gear S1 through the third clutch C3 to drive the first sun gear S1. The first sun gear S1 is connected to one end of the second clutch B2, and the other end of the second clutch B2 is connected to a hydraulic system. The first planet carrier PC1 is connected to the second gear ring R2, both the first planet carrier PC1 and the second gear ring R2 are connected to one end of the first clutch B1, and the other end of the first clutch B1 is connected to the hydraulic system. The first gear ring R1 is connected to the second planet carrier PC2. Power input to the double-row planetary gear is transmitted from the output shaft connected to the first gear ring R1 and the second planet carrier PC2 to a wheel end.

The above hybrid architecture may enable shifting between three forward gears. Among the first clutch B1, the second clutch B2, and the third clutch C3, it is in first gear when only the first clutch B1 is engaged, it is in second gear when only the second clutch B2 is engaged, and it is in third gear when only the third clutch C3 is engaged. The shifting between gears may be achieved by disengaging one of the clutches (i.e., an offgoing clutch) and engaging another clutch (i.e., an oncoming clutch). The offgoing clutch may also be referred to as an active clutch, and the oncoming clutch may also be referred to as a passive clutch. After states of the offgoing clutch and the oncoming clutch change, a power transmission path changes, which results in a change in a gear ratio, thereby enabling gear-shifting.

Although a hybrid architecture to which the embodiments of the present disclosure are applicable has been illustrated as above, the control method for the dual-motor hybrid system of the hybrid vehicle in the embodiments of the present disclosure is not limited to a specific hybrid architecture.

The gear-shifting process in the embodiments of the present disclosure includes three phases: an oil filling phase, a torque phase, and a speed phase. When a type of gear-shifting is a power-on upshift and a power-off downshift, the three phases are sequentially arranged as follows: the oil filling phase, the torque phase, and the speed phase. When the type of gear-shifting is a power-on downshift and a power-off upshift, the three phases are sequentially arranged as follows: the oil filling phase, the speed phase, and the torque phase. The power-on upshift may also be referred to as an upshift with an accelerator pedal pressed, the power-on downshift may also be referred to as a downshift with the accelerator pedal pressed, the power-off upshift may also be referred to as an upshift with the accelerator pedal released, and the power-off downshift may also be referred to as a downshift with the accelerator pedal released.

The hybrid vehicle includes a shift clutch. The shift clutch is engaged in the power-on upshift mode of the hybrid vehicle. In the embodiment shown in FIG. 3, the shift clutch may be the second clutch B2 and the third clutch C3.

Before the oncoming clutch is engaged, there is a certain gap between a driving part (such as a driving disc) and a driven part (such as a driven disc) of the clutch. During the oil filling phase, oil filling control is performed on the oncoming clutch to quickly eliminate the gap, so that the oncoming clutch can reach a torque transmission state in a relatively short time. Speed of oil filling of the clutch and follow-up performance of pressure after oil filling have an important influence on drivability and power response during gear-shifting.

In the torque phase, disengagement of the offgoing clutch and engagement of the oncoming clutch occur simultaneously, and torque of the clutch is exchanged from the offgoing clutch to the oncoming clutch.

In the speed phase, a transmission control unit sends a request for torque reduction or torque increase to generate an inertial torque, which may also be referred to as a speed regulation intervention torque. Speed of a power mechanism (such as the engine 1) is changed under action of the inertial torque until a target speed is reached.

In the torque phase, torque control of the offgoing clutch and the oncoming clutch is performed at a set time interval, which may be realized based on progress percentage, where the progress percentage is equal to a ratio of current elapsed exchange time to a torque exchange duration (i.e., a duration of the torque phase), and the current elapsed exchange time is equal to current time minus start time of the torque phase. Generally, during torque exchange, gear-shifting torques allocated to the offgoing clutch and the oncoming clutch vary linearly (i.e., an absolute value of a gradient of the gear-shifting torque remains unchanged), where the gear-shifting torque allocated to the offgoing clutch decreases linearly with time, and the gear-shifting torque allocated to the oncoming clutch increases linearly with time.

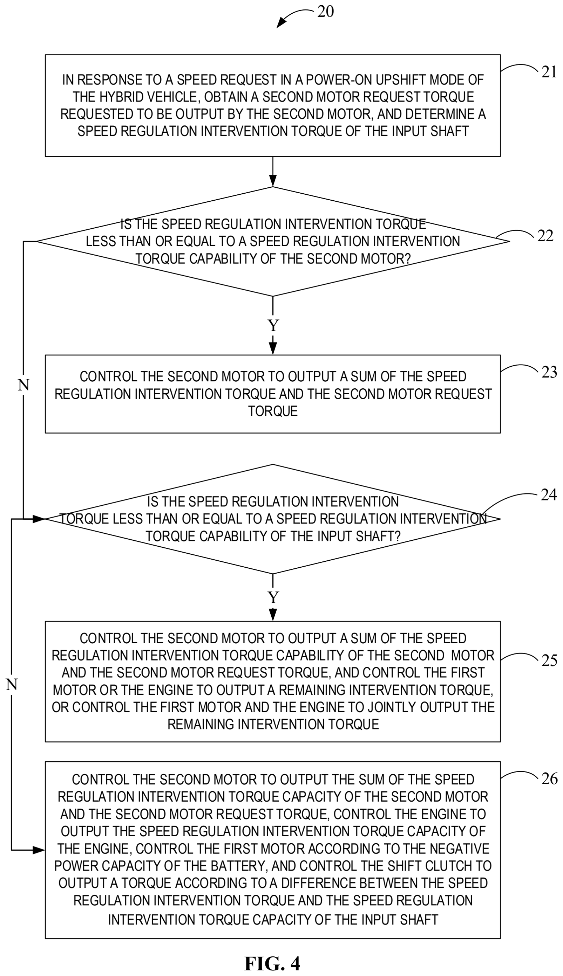

FIG. 4 is a flowchart of a control method for a dual-motor hybrid system of a hybrid vehicle according to embodiments of the present disclosure. As shown in FIG. 4, the control method 20 for the dual-motor hybrid system of the hybrid vehicle includes steps 21 to 26.

In step 21, in response to a speed request in a power-on upshift mode of the hybrid vehicle, a second motor request torque requested to be output by the second motor 3 is obtained, and a speed regulation intervention torque of the input shaft of the transmission 5 is determined.

When the hybrid vehicle is in the power-on upshift mode, the first motor 2 usually needs to be controlled to compensate for a torque in the torque phase to reduce a deceleration feel caused by upshift. Therefore, in the speed phase, a slow decrease in the speed may be caused, and in addition, a feedforward torque of the shift clutch increases, resulting in potential overheating of the shift clutch. Therefore, torque intervention is required in the speed phase. The speed regulation intervention torque of the input shaft is determined according to the speed request in this mode.

In step 22, it is determined whether the speed regulation intervention torque is less than or equal to a speed regulation intervention torque capability of the second motor 3.

In response to determining that the speed regulation intervention torque is less than or equal to the speed regulation intervention torque capability of the second motor 3, step 23 is performed, and in step 23, the second motor 3 is controlled to output a sum of the speed regulation intervention torque and the second motor request torque.

The speed regulation intervention torque capability of the second motor 3 may be determined by the following method:
maximum speed regulation intervention torque = max (the second motor request torque, the maximum torque capability of the second motor) - the second motor request torque; and
minimum speed regulation intervention torque = min (the second motor request torque, the minimum torque capability of the second motor) - the second motor request torque.

The speed regulation intervention torque capability of the second motor 3 includes the maximum speed regulation intervention torque and the minimum speed regulation intervention torque of the second motor 3. The maximum speed regulation intervention torque is determined according to a difference between the maximum of the second motor request torque without intervention and the maximum torque capability of the second motor, and the second motor request torque without intervention. The minimum speed regulation intervention torque is determined according to a difference between the minimum of the second motor request torque without intervention and the minimum torque capability of the second motor, and the second motor request torque without intervention.

If the speed regulation intervention torque is less than or equal to the speed regulation intervention torque capability of the second motor 3 (that is, the maximum speed regulation intervention torque of the second motor 3 as described above), it indicates that the second motor 3 may output the speed regulation intervention torque. In this case, the torque output by the second motor 3 is a sum of the speed regulation intervention torque and the second motor request torque.

Since the second motor 3 has a fast response, the speed of the input shaft of the transmission may be regulated quickly by controlling the second motor 3 to output the torque. The torque output by the second motor 3 is determined according to the second motor request torque and the speed regulation intervention torque. In this way, the speed of the input shaft of the transmission may be quickly regulated by controlling the second motor 3 to output the intervention torque, thereby maintaining the drivability of the vehicle.

In response to determining that the speed regulation intervention torque is greater than the speed regulation intervention torque capability of the second motor, in step 24, it is determined whether the speed regulation intervention torque is less than or equal to a speed regulation intervention torque capability of the input shaft of the transmission.

The speed regulation intervention torque capability of the input shaft of the transmission is determined by speed regulation intervention torque capabilities of the first motor, the second motor, and the engine.

The speed regulation intervention torque capability of the first motor 2 may be determined by the following method:
maximum speed regulation intervention torque = max (a first motor request torque, the maximum torque capability of the first motor) - the first motor request torque; and
minimum speed regulation intervention torque = min (the first motor request torque, the minimum torque capability of the first motor) - the first motor request torque.

The speed regulation intervention torque capability of the first motor 2 includes the maximum speed regulation intervention torque and the minimum speed regulation intervention torque of the first motor 2. The maximum speed regulation intervention torque is determined according to a difference between the maximum of the first motor request torque without intervention and the maximum torque capability of the first motor, and the first motor request torque without intervention. The minimum speed regulation intervention torque is determined according to a difference between the minimum of the first motor request torque without intervention and the minimum torque capability of the first motor, and the first motor request torque without intervention.

A speed regulation intervention torque capability of the engine 1 includes the maximum speed regulation intervention torque and the minimum speed regulation intervention torque of the engine 1. The maximum speed regulation intervention torque is determined according to a difference between the maximum of an engine request torque without intervention and the maximum torque capability of the engine, and the engine request torque without intervention. The minimum speed regulation intervention torque is determined according to a difference between the minimum of the engine request torque without intervention and the minimum torque capability of the engine, and the engine request torque without intervention.

The speed regulation intervention torque capability of the input shaft of the transmission is equal to a sum of the speed regulation intervention torque capability of the first motor 2, the speed regulation intervention torque capability of the second motor 3, and the speed regulation intervention torque capability of the engine 1.

If the speed regulation intervention torque is greater than the speed regulation intervention torque capability of the second motor 3, it indicates that the torque output by the second motor 3 is insufficient to cover the speed regulation intervention torque, at which time it needs to be determined whether the speed regulation intervention torque is less than or equal to the speed regulation intervention torque capability of the input shaft of the transmission.

If the speed regulation intervention torque is less than or equal to the speed regulation intervention torque capability of the input shaft of the transmission, step 25 is performed, and in step 25, the second motor 3 is controlled to output a sum of the speed regulation intervention torque capability of the second motor 3 and the second motor request torque, and the first motor 2 or the engine 1 is controlled to output a remaining intervention torque, or the first motor 2 and the engine 1 are controlled to jointly output the remaining intervention torque. The remaining intervention torque is a difference between the speed regulation intervention torque and the speed regulation intervention torque capability of the second motor 3. The remaining intervention torque may be solely output by the first motor 2 or the engine 1, or may be jointly output by the first motor 2 and the engine 1.

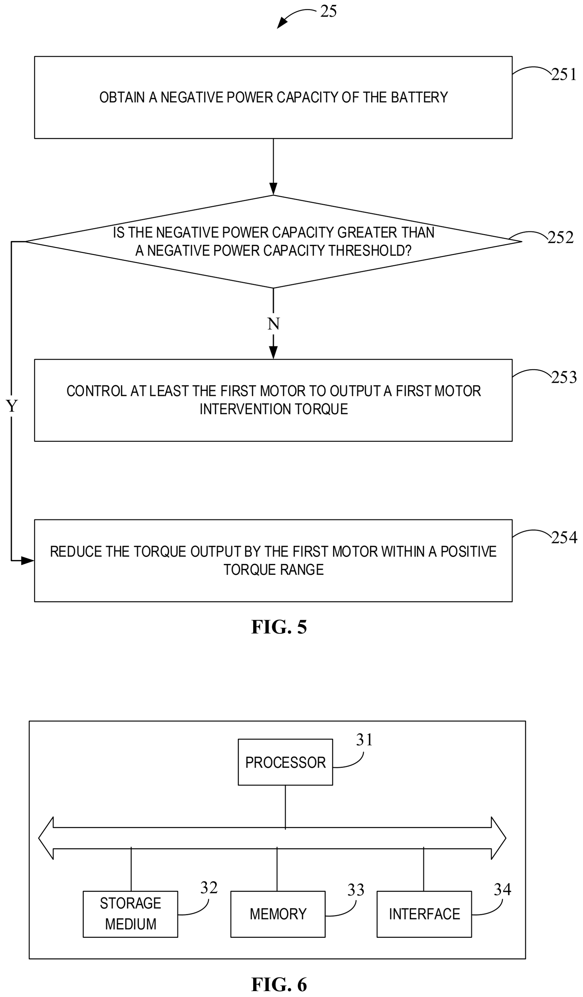

FIG. 5 is a flowchart of an embodiment of the step "the first motor 2 or the engine 1 is controlled to output a remaining intervention torque, or the first motor 2 and the engine 1 are controlled to jointly output the remaining intervention torque" shown in FIG. 4. As shown in FIG. 5, step 25 includes steps 251 to 254.

In step 251, a negative power capacity of the battery 6 is obtained.

The negative power capacity of the battery 6 represents a capacity that the battery 6 can be charged, which has a positive value. When the first motor 2 is controlled to output the torque, the battery 6 may be charged. In order to avoid overcharging of the battery 6, the negative power capacity of the battery 6 needs to be obtained.

At step 252, it is determined whether the negative power capacity is greater than a negative power capacity threshold.

If the negative power capacity is not greater than the negative power capacity threshold, step 253 is performed, and in step 253, at least the first motor 2 is controlled to output a first motor intervention torque. The first motor intervention torque is less than or equal to the remaining intervention torque, and the first motor intervention torque is a positive torque or a negative torque.

If the capacity of the battery 6 that can be charged is sufficient, the first motor 2 outputs the first motor intervention torque.

In some embodiments, step 253 includes: in response to determining that the remaining intervention torque is less than or equal to the speed regulation intervention torque capability of the first motor 2, controlling the first motor 2 to output the first motor intervention torque, the first motor intervention torque being equal to the remaining intervention torque; and in response to determining that the remaining intervention torque is greater than the speed regulation intervention torque capability of the first motor 2, controlling the first motor 2 to output the speed regulation intervention torque capability of the first motor 2, and controlling the engine 1 to output an engine intervention torque, the engine intervention torque being equal to a difference between the remaining intervention torque and the speed regulation intervention torque capability of the first motor 2.

If the speed regulation intervention torque capability of the first motor 2 is insufficient to cover the remaining intervention torque, the engine 1 needs to be controlled to output the engine intervention torque, and the engine 1 and the first motor 2 jointly output the remaining intervention torque.

If the negative power capacity is greater than the negative power capacity threshold, step 254 is performed, and in step 254, the torque output by the first motor 2 is reduced within a positive torque range.

If the capacity of the battery 6 that can be charged is insufficient, in order to prevent the battery 6 from being overcharged, the torque output by the first motor 2 is reduced within the positive torque range, and the torque output by the first motor 2 may be reduced from the positive torque to zero.

In some embodiments, step 254 includes: in response to determining that the positive torque output by the first motor 2 is less than the remaining intervention torque, controlling the engine 1 to output an engine intervention torque, the engine intervention torque being equal to a difference between the remaining intervention torque and the positive torque output by the first motor 2. If the positive torque output by the first motor 2 is insufficient to cover the remaining intervention torque, the engine 1 needs to be controlled to output the engine intervention torque, and the engine 1 and the first motor 2 jointly output the remaining intervention torque.

Referring to FIG. 4, if the speed regulation intervention torque is greater than the speed regulation intervention torque capacity of the input shaft of the transmission, step 26 is performed, and in step 26, the second motor 3 is controlled to output the sum of the speed regulation intervention torque capacity of the second motor 3 and the second motor request torque, the engine 1 is controlled to output the speed regulation intervention torque capacity of the engine, the first motor 2 is controlled according to the negative power capacity of the battery 6, and the shift clutch is controlled to output a torque according to a difference between the speed regulation intervention torque and the speed regulation intervention torque capacity of the input shaft of the transmission.

If the speed regulation intervention torque is greater than the speed regulation intervention torque capability of the input shaft of the transmission, it indicates that the speed regulation intervention torque capability of the input shaft of the transmission is insufficient to cover the speed regulation intervention torque. To prevent the battery 6 from being overcharged, the torque output by the first motor 2 is determined according to the negative power capacity of the battery 6. The shift clutch is controlled to output the torque according to the difference between the speed regulation intervention torque and the speed regulation intervention torque capacity of the input shaft of the transmission.

In some embodiments, in step 26, controlling the shift clutch to output the torque according to the difference between the speed regulation intervention torque and the speed regulation intervention torque capacity of the input shaft of the transmission includes the following steps:
determining a regulation torque according to the series/parallel mode of the dual-motor hybrid system, a gear-shifting mode, a gear, a target speed change rate of the input shaft, and an actual speed change rate of the input shaft;
determining an output torque of the shift clutch according to the difference between the speed regulation intervention torque and the speed regulation intervention torque capability of the input shaft, a feedforward torque of the shift clutch, and the regulation torque; and
controlling the shift clutch to output the output torque.

The output torque of the shift clutch includes the regulation torque, the feedforward torque, and the intervention torque. The regulation torque is determined according to a product of a regulation coefficient and a difference between the target speed change rate of the input shaft and the actual speed change rate of the input shaft. The feedforward torque is a sum of an engine torque, a motor torque, and a lock up torque. In some embodiments, the output torque of the shift clutch is controlled by an I term (integral term). The I term (integral term) regulation coefficient is determined according to the series/parallel mode of the dual-motor hybrid system, the gear-shifting mode, the gear, the target speed change rate of the input shaft, and the actual speed change rate of the input shaft.

FIG. 6 is a structural block diagram of a control apparatus for a dual-motor hybrid system of a hybrid vehicle according to embodiments of the present disclosure. The control apparatus for the dual-motor hybrid system of the hybrid vehicle is electrically connected to the dual-motor hybrid system of the present disclosure, and is configured to control the dual-motor hybrid system.

As shown in FIG. 6, the control apparatus for the dual-motor hybrid system of the hybrid vehicle includes one or more processors 31 for implementing the control method 20 for the dual-motor hybrid system of the hybrid vehicle as described above.

In some embodiments, the control apparatus for the dual-motor hybrid system of the hybrid vehicle may include a computer-readable storage medium 32, and the computer-readable storage medium 32 may store a program that may be invoked by the processor 31, and may include a nonvolatile storage medium. In some embodiments, the control apparatus for the dual-motor hybrid system of the hybrid vehicle may include a memory 33 and an interface 34. In some embodiments, the control apparatus for the dual-motor hybrid system of the hybrid vehicle may further include other hardware according to actual applications.

The computer-readable storage medium 32 in the embodiments of the present disclosure stores a program, and when the program is executed by the processor 31, the control method 20 for the dual-motor hybrid system of the hybrid vehicle as described above is implemented.

The present disclosure may adopt a form of a computer program product implemented on one or more computer-readable storage media 32 (including but not limited to a disk storage, a CD-ROM, an optical storage, and the like) including program codes. The computer-readable storage medium 32 includes permanent and non-permanent, removable and non-removable media, and may implement information storage in any method or technology. The information may be a computer-readable instruction, a data structure, a program module, or other data. Examples of the computer-readable storage medium 32 include, but are not limited to, a phase-change random access memory (PRAM), a static random access memory (SRAM), a dynamic random access memory (DRAM), another type of random access memory (RAM), a read-only memory (ROM), an electrically erasable programmable read-only memory (EEPROM), a flash memory, or another memory technology, a compact disc read-only memory (CD-ROM), a digital versatile disc (DVD) or another optical storage, a magnetic cassette, a magnetic tape, a magnetic disk storage or another magnetic storage device, or any other non-transmission medium, and may be configured to store information that can be accessed by a computing device.

Other embodiments of the present disclosure will be apparent to those skilled in the art upon consideration of the specification and practice of the present disclosure disclosed herein. The present disclosure is intended to cover any variations, uses, or adaptations of the present disclosure following the general principles thereof and including common general knowledge or commonly-used technical means in the art that are not disclosed herein. It is intended that the specification and embodiments be considered as exemplary only, with a true scope and spirit of the present disclosure being indicated by the following claims.

It should be understood that the present disclosure is not limited to the precise structures described above and shown in the drawings, and various modifications and changes may be made without departing from the scope thereof. The scope of the present disclosure is limited only by the appended claims.

## Claims

1. A control method for a dual-motor hybrid system of a hybrid vehicle, the dual-motor hybrid system comprising an engine, a first motor, a second motor, a transmission, and a mode switching clutch, wherein the first motor is drivably connected to the engine, an input shaft of the transmission is connected to the engine, the first motor, and the second motor, and the mode switching clutch is connected to the second motor and the first motor, respectively, the method comprising:
in response to a speed request in a power-on upshift mode of the hybrid vehicle, obtaining a second motor request torque requested to be output by the second motor, and determining a speed regulation intervention torque of the input shaft; and
in response to determining that the speed regulation intervention torque is less than or equal to a speed regulation intervention torque capability of the second motor, controlling the second motor to output a sum of the speed regulation intervention torque and the second motor request torque.

2. The control method for the dual-motor hybrid system of the hybrid vehicle according to claim 1, further comprising:
in response to determining that the speed regulation intervention torque is greater than the speed regulation intervention torque capability of the second motor and less than or equal to a speed regulation intervention torque capability of the input shaft, controlling the second motor to output a sum of the speed regulation intervention torque capability of the second motor and the second motor request torque, and controlling the first motor and/or the engine to output a remaining intervention torque, the remaining intervention torque being a difference between the speed regulation intervention torque and the speed regulation intervention torque capability of the second motor.

3. The control method for the dual-motor hybrid system of the hybrid vehicle according to claim 2, wherein the hybrid vehicle comprises a battery, the first motor is electrically connected to the battery, and controlling the first motor and/or the engine to output the remaining intervention torque comprises:
obtaining a negative power capacity of the battery; and
in response to determining that the negative power capacity is not greater than a negative power capacity threshold, controlling at least the first motor to output a first motor intervention torque; the first motor intervention torque being less than or equal to the remaining intervention torque, and the first motor intervention torque being a positive torque or a negative torque.

4. The control method for the dual-motor hybrid system of the hybrid vehicle according to claim 3, wherein controlling the first motor and/or the engine to output the remaining intervention torque comprises:
in response to determining that the negative power capacity is not greater than the negative power capacity threshold, and the remaining intervention torque is less than or equal to a speed regulation intervention torque capability of the first motor, controlling the first motor to output the first motor intervention torque, the first motor intervention torque being equal to the remaining intervention torque; and
in response to determining that the negative power capacity is not greater than the negative power capacity threshold, and the remaining intervention torque is greater than the speed regulation intervention torque capability of the first motor, controlling the first motor to output the speed regulation intervention torque capability of the first motor, and controlling the engine to output an engine intervention torque, the engine intervention torque being equal to a difference between the remaining intervention torque and the speed regulation intervention torque capability of the first motor.

5. The control method for the dual-motor hybrid system of the hybrid vehicle according to claim 3, further comprising:
in response to determining that the negative power capacity is greater than the negative power capacity threshold, reducing a torque output by the first motor within a positive torque range.

6. The control method for the dual-motor hybrid system of the hybrid vehicle according to claim 5, further comprising:
in response to determining that the negative power capacity is greater than the negative power capacity threshold and a positive torque output by the first motor is less than the remaining intervention torque, controlling the engine to output an engine intervention torque, the engine intervention torque being equal to a difference between the remaining intervention torque and the positive torque output by the first motor.

7. The control method for the dual-motor hybrid system of the hybrid vehicle according to claim 3, wherein the hybrid vehicle comprises a shift clutch, and the shift clutch is engaged in the power-on upshift mode of the hybrid vehicle; and the method further comprises:
in response to determining that the speed regulation intervention torque is greater than the speed regulation intervention torque capability of the input shaft, controlling the second motor to output the sum of the speed regulation intervention torque capability of the second motor and the second motor request torque, controlling the engine to output a speed regulation intervention torque capability of the engine, controlling the first motor according to the negative power capacity of the battery, and controlling the shift clutch to output a torque according to a difference between the speed regulation intervention torque and the speed regulation intervention torque capability of the input shaft.

8. The control method for the dual-motor hybrid system of the hybrid vehicle according to claim 7, wherein controlling the shift clutch to output the torque according to the difference between the speed regulation intervention torque and the speed regulation intervention torque capability of the input shaft comprises:
determining a regulation torque according to a series/parallel mode of the dual-motor hybrid system, a gear-shifting mode, a gear, a target speed change rate of the input shaft, and an actual speed change rate of the input shaft;
determining an output torque of the shift clutch according to the difference between the speed regulation intervention torque and the speed regulation intervention torque capability of the input shaft, a feedforward torque of the shift clutch, and the regulation torque; and
controlling the shift clutch to output the output torque.

9. A computer-readable storage medium, comprising one or more processors for performing the control method for the dual-motor hybrid system of the hybrid vehicle according to any one of claims 1 to 8.

10. A control apparatus for a dual-motor hybrid system of a hybrid vehicle, comprising one or more processors for performing the control method for the dual-motor hybrid system of the hybrid vehicle according to any one of claims 1 to 8.

11. A hybrid vehicle, comprising:
a dual-motor hybrid system comprising an engine, a first motor, a second motor, a transmission, and a mode switching clutch, the first motor being drivably connected to the engine, an input shaft of the transmission being connected to the engine, the first motor, and the second motor, and the mode switching clutch being connected to the second motor and the first motor, respectively; and
the control apparatus for the dual-motor hybrid system of the hybrid vehicle according to claim 10, which is electrically connected to the dual-motor hybrid system.
